# EUROPÄISCHE PATENTANMELDUNG

(11) **EP 2 471 748 A1**
(43) Veröffentlichungstag der Anmeldung: **04.07.2012**
(21) Anmeldenummer: 12162176.7
(22) Anmeldetag: 14.04.2008
(51) Int. Cl.: C02F 1/461, C02F 1/76, C02F 1/28, C02F 1/42, C02F 1/467

(54) **Elektrochemisch behandeltes Wasser, Verfahren und Vorrichtung zu dessen Herstellung und seine Verwendung als Desinfektionsmittel**

(30) Priorität: 13.04.2007 DE 102007017502
(62) Teilanmeldung aus: 08735228.2
(71) Anmelder: Aquagroup Ag, 93055 Regensburg (DE)
(72) Erfinder: Czech, Manuel, 93093 Donaustauf (DE); Philipps, André, 93059 Regensburg (DE); Saefkow, Michael, 74189 Weinsberg (DE)
(74) Vertreter: Bublak, Wolfgang

(57) **Zusammenfassung**

Die vorliegende Erfindung betrifft elektrochemisch behandeltes Wasser, erhältlich durch ein Verfahren, das gekennzeichnet ist durch die folgenden Schritte: a) Elektrolysieren von Wasser und b)Verringern der Konzentrationen der in Schritt a) entstandenen Oxidantien. Das derartig erhältliche elektrochemisch behandelte Wasser ist gekennzeichnet durch eine desinfizierende Wirkung gegenüber Bakterien, Bakteriensporen, Pilzen, Pilzsporen, Viren, Prionen oder Mischungen davon. Die Erfindung betrifft weiter Wasser, dadurch gekennzeichnet, dass es eine desinfizierende Wirkung gegenüber Bakterien, Bakteriensporen, Pilzen, Pilzsporen, Viren, Algen, Prionen oder Mischungen davon aufweist, dass es mit Ausnahme der zu den Desinfektionsmitteln gehörenden Oxidantien im Wesentlichen frei von Desinfektionsmitteln ist, und dass es eine Gesamtkonzentration an Oxidantien von kleiner 20 ppm aufweist.

## Beschreibung

Die vorliegende Erfindung betrifft elektrochemisch behandeltes Wasser, ein Verfahren und eine Vorrichtung zur Herstellung des elektrochemisch behandelten Wassers sowie seine Verwendung zur Behandlung von Wasser, seine Verwendungen zur Entkeimung und als Desinfektionsmittel.

Die elektrolytische Zersetzung wässriger Natriumchloridlösungen wird seit dem Ende des 19. Jahrhunderts großtechnisch zur Gewinnung von Natronlauge und Chlor eingesetzt. Dieses als Chloralkalielektrolyse bezeichnete Verfahren wird vorzugsweise als Diaphragmaverfahren durchgeführt, bei dem eine poröse, stromdurchlässige Scheidewand (Diaphragma) den Anodenraum vom Kathodenraum abtrennt. Durch Durchführung lediglich einer schwachen Elektrolyse und dadurch, dass die Elektrolysezelle kontinuierlich betrieben wird, ist es möglich, dass nicht die Natronlauge- bzw. Chlorproduktion im Vordergrund steht, sondern die Bildung von partiellen Oxidationsprodukten im Anodenraum bzw. Reduktionsprodukten im Kathodenraum. So entwickelte Vitold Bakhir eine kontinuierliche Elektrolysevorrichtung nach dem Diaphragmaverfahren, auch Elektrodiaphragmalyse genannt, (Urheberschein der UdSSR 882944). Beim Durchlauf einer Natriumchloridlösung durch die Anodenkammer bilden sich demzufolge oxidierende Substanzen, wie Chlor (in geringen Mengen), Hypochlorit, Chlorit, Chlordioxid, Chlorat und andere Oxidationsmittel. Einige der wichtigsten Reaktionen der wässrigen Kochsalzlösung an der Anode sind nachfolgend dargestellt:

2Cl⁻ -2e⁻→ Cl₂

Cl⁻+H₂O-2e⁻→ HOCl+H⁺

Cl⁻+2H₂O-4e⁻→ HOClO+3H⁺

HCl+2H₂O-5e⁻→ ClO₂+5H⁺

Cl⁻ + 6 OH⁻ - 6 e⁻ → ClO₃⁻ + 3 H₂O

Cl⁻ +4 OH⁻- 5 e⁻ → ClO₂ + 2 H₂O

Cl⁻ + 2 OH⁻ - 2 e⁻ → ClO⁻ + H₂O

Cl⁻+2H₂O-5e⁻→ ClO₂+4H⁺

Falls bei der Herstellung Leitungswasser eingesetzt wird, müssen vor der Elektrolyse die vorhandenen Calciumionen entfernt werden, da dies zu Funktionsstörungen durch Kalkabscheidung, insbesondere am Diaphragma, führen kann. Solch ein Verfahren zum Enthärten von Leitungswasser wird von der Siemens AG in der EP 175 123 A beschrieben.

Diese elektrochemisch behandelten Wasser können durch das Oxidationsvermögen der darin enthaltenen Oxidationsprodukte in einem breiten Anwendungsgebiet zur Desinfektion und Sterilisation eingesetzt werden. Sie sind zwar sehr wirksam, allerdings wirkt sich die Gegenwart der verschiedenen oxidierenden Verbindungen, wie der Chlorverbindungen, bei vielen Anwendungen, z.B. in der Fischindustrie und Lebensmittelindustrie, negativ aus. Es ist somit die Aufgabe der vorliegenden Erfindung, diesen Nachteil des Standes der Technik zu überwinden.

### Zusammenfassung der Erfindung

Gelöst wurde diese Aufgabe durch den überraschenden Befund, dass selbst nach Entfernen aller oxidierenden Verbindungen aus einer mit Elektrodiaphragmalyse behandelten Natriumchloridlösung die desinfizierende Wirkung nicht beeinträchtigt wird. Die Erfindung stellt demgemäß ein elektrochemisch behandeltes Wasser mit Desinfektionswirkung zur Verfügung, das vorzugsweise im Wesentlichen frei von Oxidationsmitteln ist. Ferner werden dieses enthaltende Desinfektionsmittel-Konzentrate und verdünnte Desinfektionsmittellösungen bereitgestellt.

Da die desinfizierende Wirkung auch nicht auf anderen Desinfektionsmitteln, wie Aldehyden, Alkoholen, Phenolen, Halogenaminen, Hypochlorit/Chlor, Persäuren, quaternären Ammonium-Verbindungen (QAC) und anderen synthetischen Mitteln, basiert, ist das erfindungsgemäße Wasser besonders umweltverträglich, für höhere Lebewesen nicht giftig und somit auch in sensitiven Anwendungen, wie zum Beispiel auf Lebensmitteln sowie der Medizin, anwendbar.

Die Wirkungsweise des erfindungsgemäßen Wassers unterscheidet sich grundlegend von der bisher angenommenen Wirkungsweise der klassischen der Erzeugnisse einer Elektrolyse bzw. Elektrodiaphragmalyse. Es wurde bisher angenommen, dass bei diesen Verfahren Natriumhypochlorit und andere Oxidantien für die desinfizierende Wirkung verantwortlich sind, wobei angenommen wird, dass die Oxidantien bei Verwendung oxidierend auf die Umgebung reagieren und z.B. bakterielle Zellmembranen denaturieren.

Da diese oxidierenden Verbindungen im erfindungsgemäßen Wasser entfernt wurden, muss im erfindungsgemäßen Wasser ein anderer Wirkmechanismus vorliegen. Es wird angenommen, dass die Wirkung des erfindungsgemäßen Wassers auf der Anregung des Wassermoleküls selbst beruht. Die Wassermoleküle befinden sich in einem Clusterverbund, so dass durch Durchführung einer schwachen Elektrolyse Wassermoleküle elektrisch entladen werden und die erzeugten Ladungsträger im Clusterverbund durch ständigen Austausch stabilisiert sind. Das elektrisch entladene Wasser kann daher dennoch desinfizierend wirken, da es imstande ist, Zellstrukturen zu denaturieren bzw. die Elektronentransport-Mechanismen von Mikroorganismen unwiderruflich zu stören. Dies ist einer der Gründe für die fehlenden Resistenzbildungen von Mikroorganismen gegenüber dem erfindungsgemäßen Wasser.

Wegen der fehlenden Zerlegung des Wassers in der durchgeführten schwachen Elektrolyse kann das erfindungsgemäße Wasser vorzugsweise mit einem pH von 7 hergestellt werden. Dies ist insbesondere bei der Anwendung in pH-sensitiven Anwendungen, wie der Fischzucht und an und auf Lebensmitteln, besonders bevorzugt.

Erfindungsgemäßes Wasser hat eine umfassende Wirkung gegen Bakterien, Pilze, Viren und Prionen (Beispiele: Staphylococcus aureus, Bacillus pynocyaneus, Escherichia coli, Salmonellen, Bakterien-Sporen, Hepatitis-B Virus, Poliomyelitis Virus, HIV, Adenoviren, Hautpilze, Legionellen). Verschiedene Algenarten werden ebenfalls sicher abgetötet.

Insofern ist es für eine Vielzahl Anwendungen geeignet. Beispielsweise kann erfindungsgemäßes Wasser zur Desinfektion, Sterilisation, Keimverminderung, Konservierung oder Desodorierung in einem breiten Anwendungsgebiet verwendet werden. Einsatzgebiete liegen beispielsweise im Bereich der Sterilisation medizinischer Geräte, Leitungen in der Lebensmittelindustrie, Keimreduzierung in und auf Lebensmitteln, in Brauereien und in der Entkeimung von Fischteichen.

Durch die gute Verträglichkeit, den fehlenden Geruch und den fehlenden Geschmack ist auch ein Einsatz des erfindungsgemäßen Wassers in der Prophylaxe und Behandlung menschlicher und tierischer Erkrankungen möglich. Beispielsweise lässt sich erfindungsgemäßes Wassers zur Behandlung oberflächlicher bakterieller und/oder pilzlicher Hauterkrankungen, zur Behandlung von Körperhöhlen und Wunden oder als Mundspüllösung verwenden.

### Detaillierte Beschreibung der Erfindung

Das erfindungsgemäße Desinfektionsmittel-Konzentrat ist mittels folgender Schritte erhältlich:
a) Elektrolysieren von Wasser und
b) Verringern der Konzentrationen der in Schritt a) entstandenen Oxidantien, wobei das Konzentrat einen pH-Wert von 4 bis 9 aufweist.

Der Begriff Anolyt beschreibt die Flüssigkeit, die aus dem Anodenraum erhalten wird. Gemäß der Erfindung wird nur der Anolyt zur Herstellung des erfindungsgemäßen Wassers verwendet, während der Katholyt, also die Flüssigkeit aus dem Kathodenraum, verworfen wird. Das im Folgenden besprochene erfindungsgemäße Wasser bezieht sich demzufolge nur auf den Anolyten.

Unter dem Begriff "in Schritt a) entstandenen Oxidantien" werden diejenigen Oxidationsmittel verstanden, die sich durch Durchführung eines Sorptionsschritts an Aktivkohle aus dem elektrolysierten Wasser entfernen lassen. Unter einem "Oxidationsmittel" werden chemischen Verbindungen oder Elemente verstanden, die ein positives Standardpotential aufweisen.

In einer alternativen Definition werden unter "in Schritt a) entstandenen Oxidantien" diejenigen durch das Elektrolysieren von Wasser entstehenden und desinfizierend wirkenden Oxidationsprodukte verstanden, die sich durch Durchführung eines Sorptionsschritts an Aktivkohle aus dem elektrolysierten Wasser entfernen lassen.

In noch einer weiteren, alternativen Definition werden unter "in Schritt a) entstandenen Oxidantien" diejenigen durch das Elektrolysieren von Wasser entstehenden und desinfizierend wirkenden Oxidationsprodukte verstanden, die Wasserstoffperoxid, Ozon und Singulett-Sauerstoff sind oder die neben Wasserstoff und Sauerstoff auch aus anderen Elementen bestehen.

Beispiele von "in Schritt a) entstandenen Oxidantien" sind Chlor, Hypochlorit, Chlorit, Chlordioxid, Chlorat, Brom, Bromit, Hypobromit, Bromdioxid, Iod, Iodit, Iodat, Periodat, Wasserstoffperoxid und andere Peroxide, Percarbonsäuren, Percarbonate, Persulfate, Perborate und Ozon.

Im Folgenden und in den Patentansprüchen werden die Begriffe "in Schritt a) entstandenen Oxidantien" und "Oxidantien" synonym verwendet.

Das erfindungsgemäße Desinfektionsmittel-Konzentrat weist eine desinfizierende Wirkung gegenüber Bakterien, Bakteriensporen, Pilzen, Pilzsporen, Viren, Algen, Prionen oder Mischungen davon auf. Vorzugsweise ist die Gesamtkonzentration an in Schritt a) entstandenen Oxidantien kleiner als 180 ppm, bevorzugt kleiner als 100 ppm und stärker bevorzugt von kleiner als 50 ppm. Der Gehalt an chlorhaltigen Oxidantien, Peroxiden und Ozon kann, falls nötig, durch Verdünnung auch auf kleiner als 20 ppm, bevorzugt kleiner 2 ppm, stärker bevorzugt kleiner 0,2 ppm und insbesondere auf kleiner 0,02 ppm reduziert werden; es ist insbesondere im Wesentlichen frei von Oxidantien.

Erfindungsgemäß wird gemäß einem weiteren Aspekt Wasser zur Verfügung gestellt, das gekennzeichnet ist durch
1. eine desinfizierende Wirkung gegenüber Bakterien, Bakteriensporen, Pilzen, Pilzsporen, Viren, Algen, Prionen oder Mischungen davon,
2. dass es vorzugsweise mit Ausnahme der zu den Desinfektionsmitteln gehörenden Oxidantien im Wesentlichen frei von Desinfektionsmitteln ist,
3. dass es vorzugsweise eine Gesamtkonzentration an Oxidantien von kleiner 180 ppm aufweist, und
4. dass es einen pH-Wert im Bereich von 4 bis 9 aufweist.

Unter dem Begriff "zu den Desinfektionsmitteln gehörenden Oxidantien" werden diejenigen Oxidationsmittel verstanden, die eine desinfizierende, entkeimende, keimhemmende, bakterizide, bakteriostatische, fungizide, sporozide, antivirale, algizide, gegen Prionen gerichtete oder ähnliche Wirkung aufweisen. Beispiele solcher Oxidationsmittel sind Chlor, Hypochlorit, Chlorit, Chlordioxid, Chlorat, Brom, Bromit, Hypobromit, Bromdioxid, Iod, Iodit, Iodat, Periodat, Wasserstoffperoxid und andere Peroxide, Percarbonsäuren, Percarbonate, Persulfate, Perborate und Ozon und dergleichen.

Unter dem Begriff "im Wesentlichen frei von Desinfektionsmitteln" wird verstanden, dass die Konzentrationen an Desinfektionsmitteln so gering ist, dass sie nicht desinfizierend, entkeimend, keimhemmend, bakterizid, bakteriostatisch, fungizid, sporozid, antiviral, algizid, gegen Prionen oder ähnlich wirken. Vorzugsweise wird unter dem Begriff "im Wesentlichen frei von Desinfektionsmitteln" verstanden, dass die Konzentration der jeweiligen Desinfektionsmittel kleiner als 180 ppm, mehr bevorzugt kleiner als 20 ppm, noch mehr bevorzugt kleiner als 2 ppm und am meisten bevorzugt kleiner als 0,2 ppm, beträgt.

Beispiele von Desinfektionsmitteln schließen Aldehyde, Alkohole, Phenole, Halogenamine, quaternären Ammonium-Verbindungen (QAC) und dergleichen ein.

Die Oxidantien werden durch ein geeignetes Sorbens im Anschluss an die elektrochemische Behandlung entfernt. Bevorzugt wird Aktivkohle eingesetzt, aber auch andere Sorbentien wie Aluminiumoxid, Siliciumoxid oder Zeolithe oder Kombinationen davon sind geeignet.

Das so erhaltene Wasser kann als Konzentrat zur Herstellung von Desinfektionsmittel dienen. Der Gehalt an Oxidantien liegt dann in einem Bereich kleiner als 180 ppm, vorzugsweise kleiner als 100 ppm und insbesondere kleiner 50 ppm. Durch Verdünnen des Konzentrats können die Konzentrationen der Oxidantien auf kleiner 20 ppm, bevorzugt kleiner 2 ppm, stärker bevorzugt kleiner 0,2 ppm und am meisten bevorzugt kleiner 0,02 ppm verringert werden. Der pH-Wert der so erhaltbaren Desinfektionsmittel liegt im Bereich von 4 bis 9, vorzugsweise zwischen 5 und 8, besonders bevorzugt zwischen 6 und 8, und insebesondere pH 7.

Die Menge des zur Entfernung der bei der Elektrolyse entstandenen Oxidantien notwendigen Sorbens hängt von der elektrochemischen Behandlung, der gewünschten Endkonzentration an verbleibenden Oxidantien, der Fließgeschwindigkeit durch das Sorptionsmedium und der Sorptionsqualität des Sorptionsmediums ab und kann vom Fachmann geeignet gewählt werden.

Die Sorptionsqualität von Aktivkohle kann durch die sogenannte Halbwertsstrecke gekennzeichnet werden. Die Halbwertsstrecke bezeichnet die Strecke, die eine sorbierende Substanz bei einer gegebenen Durchflussgeschwindigkeit zurücklegen muss, damit ihr Gehalt um die Hälfte reduziert wird. Geeignete Aktivkohle weist eine Halbwertsstrecke im Bereich von 10 bis 0,05 cm, bevorzugt von 5 bis 0,1 cm, auf, bei einer Durchflussgeschwindigkeit von z.B. 10m/Stunde. Eine Aktivkohle, die eine Halbwertsstrecke in diesem Bereich aufweist, ist zum Beispiel eine aus Kokosnussschalen hergestellte Aktivkohle. Auch andere Aktivkohlearten sind geeignet, z.B. aus Steinkohle, Braunkohle oder Torf hergestellte.

Die Elektrolyse wird vorzugsweise unter Verwendung eines Diaphragmas durchgeführt (Elektrodiaphragmalyse). Als Diaphragma eignet sich z.B. sulfoniertes PTFE.

Die Wahl der Elektrolysebedingungen sind nicht besonders beschränkt und kann vom Fachmann durch Wahl geeigneter Parameter durchgeführt werden. Regelbare Parameter schließen insbesondere ein: Stromaufnahme, Durchflussrate des Elektrolyts, Salzgehalt des Elektrolyts, Prozesswasserzufluß und Reaktorspannung.

Bevorzugt wird eine schwache Elektrolyse bei einer Stromdichte von 0,5 - 10 W/cm², mehr bevorzugt bei 0,8 bis 7W/cm², und am meisten bevorzugt bei 1 bis 5 W/cm², durchgeführt.

Um eine Elektrolyse bei der gewünschten Stromdichte zu ermöglichen, enthält das elektrochemisch zu behandelnde Wasser bevorzugt Alkalimetallkationen und halogenhaltige Anionen, schwefelhaltige Anionen, phosphorhaltige Anionen, Carboxylate, Carbonate, Mischungen davon und andere Salze, die einen Stromfluss ermöglichen. Salze von Erdalkalimetallionen sind prinzipiell auch geeignet, jedoch nicht bevorzugt, da Erdalkalimetallionen die Elektrolyse stören können, insbesondere durch Ablagerungen an dem Diaphragma. Besonders bevorzugt wird eine Kochsalzlösung eingesetzt, die im Wesentlichen frei von Calciumionen ist.

Die Vorrichtung zur Herstellung des erfindungsgemäßen Wassers umfasst a) eine Vorrichtung zur Durchführung einer Elektrodiaphragmalyse, und nachgeschaltet b) eine Vorrichtung zur Sorption der Oxidantien.

Im einfachsten Fall erfolgt die Sorption der Oxidantien durch Filtration über Aktivkohle. Der produzierte Elektrolyt kann mit einer auf den Aktivkohletyp optimierten Durchflußgeschwindigkeit, z.B. 10 m/h, durchgeleitet werden. Filtrationsdruck und Fließgeschwindigkeit können kontrolliert und mittels Pumpen gesteuert werden. Das Filtrat kann auf Reinheit online geprüft werden und die Filtration kann nach vorgegebenen Parametern gesteuert werden.

Falls nötig, kann ein Ionenaustauscher zur Entfernung der Calciumionen vorgeschaltet werden.

### Vergleichsbeispiel 1

Es wurde eine gesättigte Kochsalzlösung aus enthärtetem Trinkwasser (0° dH) und Kochsalz gemäß EN973 hergestellt. Die gesättigte Kochsalzlösung wird mittels einer elektronisch kontrollierten Pumpe dem Prozesswasser (enthärtetes (0° dH) Trinkwasser) zugeführt, um einen Elektrolyt definierter Leitfähigkeit zu erzeugen. Dieser Elektrolyt wird in einem elektrochemischen Reaktor einer schwachen Elektrolyse (Diaphragmalyse) unterworfen und anschließend der Anolyt der Vorrichtung entnommen.

### Herstellungsbeispiel 1

Es wurde wie in Vergleichsbeispiel 1 verfahren, außer dass der der Vorrichtung entnommene Anolyt in einem zweiten nachfolgenden Schritt einer Filtration über aus Kokosnussschalen hergestellter Aktivkohle unterworfen wurde.

### Tests

Die Anolyten wurden mit enthärtetem und über Aktivkohle gefiltertem Trinkwasser (0° dH) auf 10 % verdünnt und anschließend auf die Anwesenheit von Chlor, Hypochlorit, Chlorit, Chlordioxid, Chlorat, Ozon und H₂O₂ analysiert und mikrobiologischen Tests unterzogen (Staphylococcus aureus mit einer Ausgangverkeimung von log5). Die Ergebnisse sind in der nachfolgenden Tabelle 1 dargestellt.

**Tabelle 1**

| | Vergleichsbeispiel 1 | Herstellungsbeispiel 1 |
|---|---|---|
| Konzentration an Oxidantien | 25 ppm | 0,02 ppm |
| KBE/ml | 0 | 0 |

Aus der Tabelle 1 ist ersichtlich, dass trotz der Entfernung desinfizierend wirkender Oxidantien wie Chlor, Hypochlorit, Chlorit, Chlordioxid, Chlorat, Ozon und H₂O₂ eine desinfizierende Wirkung gegeben ist, die vergleichbar zu der Wirkung von herkömmlichen Oxidantien enthaltenden Anolyten ist.

### In-vitro-Toxizität

Zur Abschätzung der toxikologischen Potenz des erfindungsgemäßen Wassers für den Menschen und einer potenziellen Abwassergefährdung wurden *in-vitro-*Biotests durchgeführt. Es wurden folgende Prüfverfahren herangezogen:
Akuter Leuchtbakterientest mit Vibrio fischeri (Hemmwirkung auf die Lichtemission) zur Abschätzung des toxischen Potentials von Abwässern, Sicker-Oberflächen- und Porenwässern nach DIN EN ISO 11348-2 (1998)
Chronischer Leuchtbakterientest mit Vibrio fischeri (Hemmwirkung auf das Wachstum) nach DIN EN ISO 38412-37 (1999)
Mutatox^{®} Gentoxizitäts-/Mutagenitätstest mit der nicht-leuchtenden Mutante M169 von Vibrio fischeri nach MACHEREY-NAGEL
Akute Zytoxizität an murinen Fibroblasten (L₉₂₉-Zellen, ATCC CCL 1) mit der Neutralrot-Methode nach DIN EN 30993-5 (1994) zur biologischen Beurteilung von Medizinprodukten
Akute Zytoxizität an humanen Aminozellen (FL-Zellen, ATCC CC 62) mit der Neutralrot-Methode nach DIN EN 30993-5 (1994) zur biologischen Beurteilung von Medizinprodukteen
Chronische Zytoxizität an humanen Aminozellen (FL-Zellen, ATCC CC 62) mit der Neutralrot-Methode nach DIN EN 30993-5 (1994) zur biologischen Beurteilung von Medizinprodukteen
Akute Gewebetoxizität an Ratten-Peritonealgewebe im Explantattest
Chronische Gewebetoxizität an Ratten-Peritonealgewebe im Explantattest
Phytotoxizitätstest an der Wasserlinse (Lemna minor) nach ISO TC 147/SC 5 N (draft 2001)

### Akute Toxizität

Zellen von Mäusen (murine Fibroblasten) hielten eine Konzentration von 10% des Wassers gemäß Herstellungsbeispiel 1 für eine Zeitdauer von bis zu 60 Min. mit einer 100%igen Vitalität aus und behielten auch noch nach 180 Min. über 80% ihrer Vitalität. Kurzfristig, d.h. für 10 Minuten, wurde eine Konzentration von 25% toleriert.

Menschliche Amnion-Zellen tolerierten eine Konzentration von 10% für 10 Min. und eine Konzentration von 2% für 180 Min. Je nach Indikation und Einwirkungsdauer orientiert sich die maximale Konzentration an diesen Eckdaten.

### Chronische Toxizität

Die Daten der Tests auf chronische Toxizität (Einwirkdauer 24 h) ergeben eine Toleranz für 2 %-ige Lösungen des Wassers gemäß Herstellungsbeispiel 1.

### Mutagenität

Es gab keinen Hinweis auf Mutagenität des Wassers gemäß Herstellungsbeispiel 1. Es ist nicht mutagen.

### Phytotoxizität

Aus den Leuchtbakterientests und den Tests an der Wasserlinse Lemna minor ergibt sich eine Verträglichkeit des Wassers gemäß Herstellungsbeispiel 1 bei Konzentrationen < 2 %.

Aufgrund der Resultate der Untersuchungen an eukaryontischen Zellen kann erfindungsgemäßes Wasser bei einer Konzentration von < 2 % sowohl bei kurzzeitiger als auch bei einer 24 h Applikation als gut verträglich eingestuft werden. Die Resultate der Gewebeexplantatstests weisen zwar darauf hin, dass unter praxisnahen Bedingungen eine höhere Konzentration bis zu 10% als unbedenklich gelten kann. Letztendlich maßgebend für die Einstufung sind jedoch die an humanen Zellen ermittelten Ergebnisse wegen der von ihnen gezeigten höchsten Sensitivität. Die Ergebnisse des Genotoxizitätstests weisen nicht auf ein mutagenes Potenzial von erfindungsgemäßes Wasser hin. Die gute Verträglichkeit bei Konzentrationen unterhalb von 2% sowie die antimikrobielle Wirksamkeit selbst bei einer Verdünnung von 1:105 sprechen jedoch für eine Anwendbarkeit in diesem Konzentrationsbereich. Aus den Leuchtbakterientests und dem Phytotoxizitätstest lässt sich für erfindungsgemäßes Wasser bei Konzentrationen < 0,1 % eine ökotoxikologische Unbedenklichkeit ableiten. Weitere bevorzugte Ausführungsformen der Erfindung sind nachfolgend beschrieben.
1. Desinfektionsmittel-Konzentrat, erhältlich durch ein Verfahren, das gekennzeichnet ist durch die folgenden Schritte:
   a) Elektrolysieren von Wasser und
   b) Verringern der Konzentrationen der in Schritt a) entstandenen Oxidantien des Anolyten auf kleiner als 180 ppm,
   und weiter gekennzeichnet durch eine desinfizierende Wirkung gegenüber Bakterien, Bakteriensporen, Pilzen, Pilzsporen, Viren, Prionen oder Mischungen davon, wobei das Konzentrat einen pH-Wert von 4 bis 9 aufweist.
2. Desinfektionsmittel-Konzentrat gemäß Ausführungsform 1, gekennzeichnet durch eine Gesamtkonzentration an in a) entstandenen Oxidantien von kleiner als 180 pp.
3. Desinfektionsmittel-Konzentrat nach Ausführungsform 1, gekennzeichnet durch eine Gesamtkonzentration an in a) entstandenen Oxidantien von kleiner 100 ppm.
4. Desinfektionsmittel-Konzentrat nach Ausführungsform 1, gekennzeichnet durch eine Gesamtkonzentration an in a) entstandenen Oxidantien von kleiner 50 ppm.
5. Desinfektionsmittel-Konzentrat nach Ausführungsform 4, dadurch gekennzeichnet, dass der Gehalt an chlorhaltigen Oxidantien, Peroxiden und Ozon auf kleiner als 20 ppm gesenkt wird.
6. Desinfektionsmittel-Konzentrat nach Ausführungsform 4, dadurch gekennzeichnet, dass der Gehalt an chlorhaltigen Oxidantien, Peroxiden und Ozon durch Verdünnen auf jeweils kleiner als 2 ppm gesenkt wird.
7. Desinfektionslösung, dadurch gekennzeichnet, dass der Gehalt an chlorhaltigen Oxidantien, Peroxiden und Ozon durch Verdünnen des Desinfektionsmittel-Konzentrates auf jeweils kleiner als 0,2 ppm gesenkt wird.
8. Desinfektionslösung nach Ausführungsform 7, dadurch gekennzeichnet, dass der Gehalt an chlorhaltigen Oxidantien, Peroxiden und Ozon durch Verdünnen auf jeweils kleiner als 0,02 ppm gesenkt wird.
9. Desinfektionsmittel nach einem der Ausführungsformen 7 bis 8, dadurch gekennzeichnet, dass es im Wesentlichen frei von Oxidantien ist.
10. Desinfektionsmittel-Konzentrat nach einem der Ausführungsformen 1 bis 6, dadurch gekennzeichnet, dass in Schritt b) die Oxidantien durch ein geeignetes Sorbens entfernt werden.
11. Desinfektionsmittel-Konzentrat nach Ausführungsform 10, dadurch gekennzeichnet, dass das Sorbens unter Aktivkohle, Aluminiumoxid, Siliciumoxid, Ionenaustauscher, Zeolith oder Mischungen davon gewählt ist.
12. Desinfektionsmittel-Konzentrat nach einem der Ausführungsformen 1 bis 6, dadurch gekennzeichnet, dass mittels Elektrodiaphragmalyse in Schritt a) elektrolysiert wird und die Lösung des Kathodenraums abgetrennt und verworfen wird.
13. Desinfektionsmittel-Konzentrat nach einem der Ausführungsformen 1 bis 6, dadurch gekennzeichnet, dass dem in Schritt a) zu elektrolysierenden Ausgangswasser zur Steigerung der Leitfähigkeit Salze, wie Salze aus Alkalimetallkationen und halogenhaltigen Anionen, schwefelhaltigen Anionen, phosphorhaltigen Anionen, Carboxylaten, Carbonaten, und Mischungen dieser Anionen, zugesetzt sind.
14. Desinfektionsmittel-Konzentrat nach Ausführungsform 13, dadurch gekennzeichnet, dass das in Schritt a) zu elektrolysierende Ausgangswasser Natriumchlorid enthält.
15. Desinfektionsmittel-Konzentrat nach einem der Ausführungsformen 1 bis 6, dadurch gekennzeichnet, dass in Schritt a) die Elektrolyse mit einer Stromdichte von 0,5 bis 10 W/cm² durchgeführt wird.
16. Desinfektionsmittel-Konzentrat nach einem der Ausführungsformen 1 bis 6, dadurch gekennzeichnet, dass das Verfahren kontinuierlich durchgeführt wird.
17. Wasser, dadurch gekennzeichnet, dass es eine desinfizierende Wirkung gegenüber Bakterien, Bakteriensporen, Pilzen, Pilzsporen, Viren, Algen, Prionen oder Mischungen davon aufweist; weiter gekennzeichnet dadurch, dass es mit Ausnahme der zu den Desinfektionsmitteln gehörenden Oxidantien im Wesentlichen frei von Desinfektionsmitteln ist; und weiter dadurch gekennzeichnet, dass es eine Gesamtkonzentration an Oxidantien von kleiner 20 ppm aufweist, erhältlich durch das Verfahren gemäß Ausführungsform 1.
18. Wasser gemäß Ausführungsform 17, gekennzeichnet durch eine Gesamtkonzentration an Oxidantien von kleiner 2 ppm.
19. Wasser gemäß Ausführungsform 17 oder 18, gekennzeichnet durch eine Gesamtkonzentration an Oxidantien von kleiner 0,2 ppm.
20. Wasser nach einem der Ausführungsformen 17 bis 19, dadurch gekennzeichnet, dass der Gehalt an chlorhaltigen Oxidantien, Peroxiden und Ozon jeweils kleiner als 0,02 ppm ist.
21. Wasser nach einem der Ausführungsformen 17 bis 20, dadurch gekennzeichnet, dass es im Wesentlichen frei von Oxidantien ist.
22. Vorrichtung, gekennzeichnet durch
   a) eine Vorrichtung zur Durchführung einer Elektrodiaphragmalyse,
   b) einer nachgeschalteten Vorrichtung zur Sorption von Oxidantien.
23. Vorrichtung nach Ausführungsform 22, gekennzeichnet durch eine Aktivkohle verwendende Vorrichtung zur Sorption von Oxidantien.
24. Verwendung eines Desinfektionsmittel-Konzentrates gemäß einem der Ausführungsformen 1 bis 6 oder einer Desinfektionslösung gemäß einem der Ausführungsformen 7 bis 8 zur Desinfektion, Sterilisation, Keimverminderung, Konservierung und/oder Desodorierung.
25. Verwendung gemäß Ausführungsform 24 in der Fischzucht oder der Fischverarbeitung, zur Leitungsdesinfektion im Brauereiwesen, in der Lebensmittelindustrie an oder in Lebensmitteln, zur allgemeinen Flächendesinfektion oder in medizinischen Einrichtungen.
26. Desinfektionsmittel-Konzentrat gemäß einem der Ausführungsformen 1 bis 6 oder eine Desinfektionslösung gemäß einem der Ausführungsformen 7-8 zur therapeutischen und/oder prophylaktischen Behandlung.
27. Desinfektionsmittel gemäß Ausführungsform 26 zur therapeutischen und/oder prophylaktischen Behandlung von Haut, Schleimhäuten, Wunden und/oder Körperhöhlen.
28. Verfahren zur Herstellung eines Desinfektionsmittel-Konzentrates gemäß einem der Ausführungsformen 1 bis 6, gekennzeichnet durch die folgenden Schritte:
   a) Elektrolysieren von Wasser,
   b) Entnahme des Anolyten und
   c) Verringern der Konzentrationen der in Schritt a) entstandenen Oxidantien des Anolyten.
29. Verfahren nach Ausführungsform 28, dadurch gekennzeichnet, dass in Schritt b) die Oxidantien durch ein geeignetes Sorbens entfernt werden.
30. Verfahren nach Ausführungsform 28 oder 29, dadurch gekennzeichnet, dass das Sorbens unter Aktivkohle, Aluminiumoxid, Siliciumoxid, Ionenaustauscher, Zeolith oder Mischungen davon gewählt ist.
31. Verfahren nach einem der Ausführungsformen 28 bis 30, dadurch gekennzeichnet, dass mittels Elektrodiaphragmalyse in Schritt a) elektrolysiert wird und die Lösung des Kathodenraums abgetrennt und verworfen wird.
32. Verfahren nach einem der Ausführungsformen 28 bis 31, dadurch gekennzeichnet, dass das in Schritt a) zu elektrolysierende Ausgangswasser Alkalimetallkationen und halogenhaltige Anionen, schwefelhaltige Anionen, phosphorhaltige Anionen, Carboxylate, Carbonate, und Mischungen davon enthält.
33. Verfahren nach einem der Ausführungsformen 28 bis 32, dadurch gekennzeichnet, dass das in Schritt a) zu elektrolysierende Ausgangswasser Natriumchlorid enthält.
34. Verfahren nach einem der Ausführungsformen 28 bis 33, dadurch gekennzeichnet, dass das in Schritt a) die Elektrolyse kontinuierlich durchgeführt wird.
35. Verfahren nach einem der Ausführungsformen 28 bis 34, dadurch gekennzeichnet, dass in Schritt a) die Elektrolyse mit einer Stromdichte von 0,5 bis 10 W/cm² durchgeführt wird.

## Patentansprüche

1. Desinfektionsmittel-Konzentrat, erhältlich durch ein Verfahren, das **gekennzeichnet ist durch** die folgenden Schritte:
a) Elektrolysieren von Wasser und
b) Verringern der Konzentrationen der in Schritt a) entstandenen Oxidantien des Anolyten auf kleiner als 180 ppm,
und weiter **gekennzeichnet durch** eine desinfizierende Wirkung gegenüber Bakterien, Bakteriensporen, Pilzen, Pilzsporen, Viren, Prionen oder Mischungen davon, wobei das Konzentrat einen pH-Wert von 4 bis 9 aufweist.

2. Desinfektionsmittel-Konzentrat gemäß Anspruch 1, **gekennzeichnet durch** eine Gesamtkonzentration an in a) entstandenen Oxidantien von kleiner als 180 ppm, bevorzugt kleiner 100 ppm, und besonders bevorzugt kleiner 50 ppm.

3. Desinfektionsmittel-Konzentrat nach Anspruch 1, **dadurch gekennzeichnet, dass** der Gehalt an chlorhaltigen Oxidantien, Peroxiden und Ozon auf kleiner als 20 ppm, bevorzugt auf jeweils kleiner als 2 ppm gesenkt wird.

4. Desinfektionslösung, **dadurch gekennzeichnet, dass** der Gehalt an chlorhaltigen Oxidantien, Peroxiden und Ozon durch Verdünnen des Desinfektionsmittel-Konzentrates auf jeweils kleiner als 0,2 ppm gesenkt wird, bevorzugt kleiner als 0,02 ppm, und besonders bevorzugt im Wesentlichen frei von Oxidantien ist.

5. Desinfektionsmittel-Konzentrat nach einem der Ansprüche 1 bis 3, **dadurch gekennzeichnet, dass** in Schritt b) die Oxidantien durch ein geeignetes Sorbens entfernt werden, wobei das Sorbens insbesondere unter Aktivkohle, Aluminiumoxid, Siliciumoxid, Ionenaustauscher, Zeolith oder Mischungen davon gewählt ist.

6. Desinfektionsmittel-Konzentrat nach einem der Ansprüche 1 bis 3, **dadurch gekennzeichnet, dass** mittels Elektrodiaphragmalyse in Schritt a) elektrolysiert wird und die Lösung des Kathodenraums abgetrennt und verworfen wird, wobei die Elektrodiaphragmalyse so durchgeführt wird, dass Wassermoleküle elektrisch entladen, die erzeugten Ladungsträger im Clusterverband stabilisiert werden und dadurch imstande sind, Zellstrukturen zu denaturieren, und/oder dem in Schritt a) zu elektrolysierenden Ausgangswasser zur Steigerung der Leitfähigkeit Salze, wie Salze aus Alkalimetallkationen und halogenhaltigen Anionen, schwefelhaltigen Anionen, phosphorhaltigen Anionen, Carboxylaten, Carbonaten, und Mischungen dieser Anionen, zugesetzt sind.

7. Desinfektionsmittel-Konzentrat nach Anspruch 6, **dadurch gekennzeichnet, dass** das in Schritt a) zu elektrolysierende Ausgangswasser Natriumchlorid enthält.

8. Desinfektionsmittel-Konzentrat nach einem der Ansprüche 1 bis 3, **dadurch gekennzeichnet, dass** in Schritt a) die Elektrolyse mit einer Stromdichte von 0,5 bis 10 W/cm² durchgeführt wird, und/oder wobei das Verfahren kontinuierlich durchgeführt wird.

9. Wasser, **dadurch gekennzeichnet, dass** es eine desinfizierende Wirkung gegenüber Bakterien, Bakteriensporen, Pilzen, Pilzsporen, Viren, Algen, Prionen oder Mischungen davon aufweist; weiter **gekennzeichnet dadurch, dass** es mit Ausnahme der zu den Desinfektionsmitteln gehörenden Oxidantien im Wesentlichen frei von Desinfektionsmitteln ist; und weiter **dadurch gekennzeichnet, dass** es eine Gesamtkonzentration an Oxidantien von kleiner 20 ppm aufweist, bevorzugt kleiner 2 ppm, besonders bevorzugt kleiner 0,2 ppm, erhältlich durch das Verfahren gemäß Anspruch 1.

10. Wasser nach Anspruch 9, **dadurch gekennzeichnet, dass** der Gehalt an chlorhaltigen Oxidantien, Peroxiden und Ozon jeweils kleiner als 0,02 ppm ist, und/oder es im Wesentlichen frei von Oxidantien ist.

11. Vorrichtung, **gekennzeichnet durch**
a) eine Vorrichtung zur Durchführung einer Elektrodiaphragmalyse,
b) einer nachgeschalteten Vorrichtung zur Sorption von Oxidantien.

12. Vorrichtung nach Anspruch 11, **gekennzeichnet durch** eine Aktivkohle verwendende Vorrichtung zur Sorption von Oxidantien.

13. Verwendung eines Desinfektionsmittel-Konzentrates gemäß einem der Ansprüche 1 bis 3 oder einer Desinfektionslösung gemäß Anspruch 4 zur Desinfektion, Sterilisation, Keimverminderung, Konservierung und/oder Desodorierung.

14. Verwendung gemäß Anspruch 13 in der Fischzucht oder der Fischverarbeitung, zur Leitungsdesinfektion im Brauereiwesen, in der Lebensmittelindustrie an oder in Lebensmitteln, zur allgemeinen Flächendesinfektion oder in medizinischen Einrichtungen.

15. Desinfektionsmittel-Konzentrat gemäß einem der Ansprüche 1 bis 3 oder eine Desinfektionslösung gemäß Anspruch 4 zur therapeutischen und/oder prophylaktischen Behandlung.

16. Desinfektionsmittel gemäß Anspruch 15 zur therapeutischen und/oder prophylaktischen Behandlung von Haut, Schleimhäuten, Wunden und/oder Körperhöhlen.

17. Verfahren zur Herstellung eines Desinfektionsmittel-Konzentrates gemäß einem der Ansprüche 1 bis 3, **gekennzeichnet durch** die folgenden Schritte:
a) Elektrolysieren von Wasser,
b) Entnahme des Anolyten und
c) Verringern der Konzentrationen der in Schritt a) entstandenen Oxidantien des Anolyten.

18. Verfahren nach Anspruch 17, **dadurch gekennzeichnet, dass** in Schritt b) die Oxidantien durch ein geeignetes Sorbens, insbesondere durch Aktivkohle, Aluminiumoxid, Siliciumoxid, Ionenaustauscher, Zeolith oder Mischungen davon entfernt werden.

19. Verfahren nach einem der Ansprüche 17 bis 18, **dadurch gekennzeichnet, dass** mittels Elektrodiaphragmalyse in Schritt a) elektrolysiert wird und die Lösung des Kathodenraums abgetrennt und verworfen wird, wobei das in Schritt a) zu elektrolysierende Ausgangswasser Alkalimetallkationen und halogenhaltige Anionen, schwefelhaltige Anionen, phosphorhaltige Anionen, Carboxylate, Carbonate, und Mischungen davon, vorzugsweise Natriumchlorid, enthält.

20. Verfahren nach einem der Ansprüche 17 bis 19, **dadurch gekennzeichnet, dass** in Schritt a) die Elektrolyse kontinuierlich durchgeführt wird.

21. Verfahren nach einem der Ansprüche 17 bis 20, **dadurch gekennzeichnet, dass** in Schritt a) die Elektrolyse mit einer Stromdichte von 0,5 bis 10 W/cm² durchgeführt wird.
